(19) **Europäisches Patentamt / European Patent Office / Office européen des brevets**

(11) **EP 2 442 557 B1**

(12) **EUROPEAN PATENT SPECIFICATION**

(45) Date of publication and mention
of the grant of the patent:
**13.03.2019 Bulletin 2019/11**

(21) Application number: **11007698.1**

(22) Date of filing: **21.09.2011**

(51) Int Cl.:
*H04N 5/357* (2011.01)    *H04N 5/341* (2011.01)
*H04N 5/3745* (2011.01)   *H04N 5/378* (2011.01)
*H04N 5/374* (2011.01)    *H04N 5/32* (2006.01)
*H04N 5/345* (2011.01)

(54) **X-ray imaging apparatus**

Röntgenstrahlungsaufnahmevorrichtung

Appareil d'imagerie par radiation à rayons x

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2010 JP 2010230102**

(43) Date of publication of application:
**18.04.2012 Bulletin 2012/16**

(73) Proprietor: **Canon Kabushiki Kaisha
Tokyo (JP)**

(72) Inventors:
• **Naito, Yuichi
Ohta-ku,
Tokyo (JP)**
• **Saito, Hidehiko
Ohta-ku,
Tokyo (JP)**

(74) Representative: **WESER & Kollegen
Radeckestraße 43
81245 München (DE)**

(56) References cited:
JP-A- 2002 026 302    US-A- 6 035 013
US-A1- 2009 135 245

**Description**

BACKGROUND OF THE INVENTION

Field of the Invention

The present invention relates to a radiation imaging apparatus, a control method for the radiation imaging apparatus, a storage medium and, more particularly, to a radiation imaging apparatus which reduces image artifacts upon imaging an object by intermittently irradiating the object with radiation in the form of pulses, a control method for the radiation imaging apparatus, and a storage medium.

Description of the Related Art

Recently, in the field of radiation imaging apparatuses, especially digital X-ray imaging apparatuses, a large-area flat panel type radiation imaging apparatus based on a 1X optical system using photoelectric conversion elements has been widely used, instead of an image intensifier, for the purpose of increasing resolution, decreasing volume, and suppressing image distortion.

A large-area flat panel sensor formed by two-dimensionally joining photoelectric conversion elements generated on a silicon semiconductor wafer by a CMOS semiconductor manufacturing process is available as a flat panel sensor based on a 1X optical system which is used for a radiation imaging apparatus.

Japanese Patent Laid-Open No. 2002-026302 discloses a method for manufacturing a large-area flat panel sensor by tiling a plurality of rectangular semiconductor substrates which are rectangular imaging elements obtained by cutting photoelectric conversion elements in the form of strips from a silicon semiconductor wafer, in order to implement a large-area flat panel sensor equal to or larger than the silicon semiconductor wafer size. US 6 035 013 A discloses a radiographic imaging system including a plurality of radiation imaging devices arranged in a plurality of columns, the plurality of columns being tiled together to form a mosaic.

In addition, Japanese Patent Laid-Open No. 2002-344809 discloses the circuit arrangement for each rectangular semiconductor substrate obtained by cutting out photoelectric conversion elements in the form of strips. On each of the rectangular semiconductor substrates cut out in the form of strips, vertical and horizontal shift registers as readout control circuits are arranged together with two-dimensionally arrayed photoelectric conversion elements. External terminals (electrode pads) are provided near the horizontal shift register. Control signals and clock signals input from the external terminals control the vertical and horizontal shift registers on each rectangular semiconductor substrate to cause the respective shift registers to sequentially output the respective pixel arrays in synchronism with the clock signals.

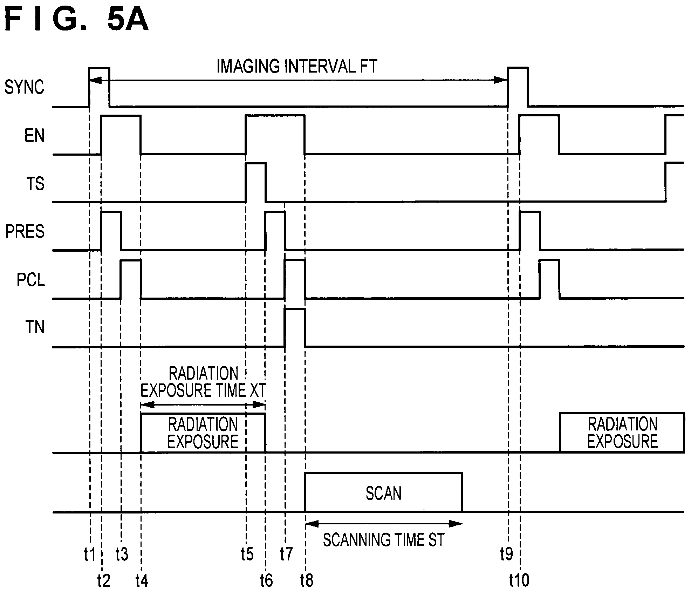

For example, as shown in Fig. 5A, no significant problem occurs when the sum of a scanning time ST required to output electrical signals from all the photoelectric conversion elements and a radiation signal accumulation time XT (exposure time XT) is smaller than an imaging interval FT of a synchronization signal, that is, the frame rate is relatively low.

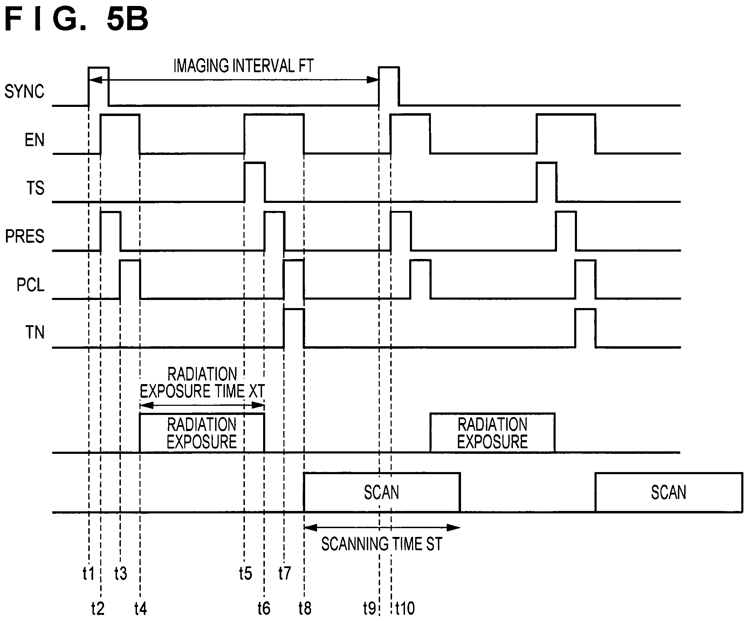

Fig. 5B shows an example of an imaging mode in which the sum of the scanning time ST required to output electrical signals from all the photoelectric conversion elements and the radiation signal accumulation time XT (exposure time XT) is larger than the imaging interval FT of a synchronization signal. That is, this is an imaging mode in which the frame rate is relatively high, in which the shift registers on each rectangular semiconductor substrate are scanned to perform resetting operation for starting accumulation of radiation signals at the time point indicated by t9 in Fig. 5B during an output period of an analog signal. If, however, resetting operation is performed during an analog signal scan, currents simultaneously flow in all the pixels on the rectangular semiconductor substrate to cause fluctuations in the power supply voltage of the rectangular semiconductor substrate. That is, an analog signal output during resetting operation is disturbed to produce artifacts in a moving image.

The present invention provides a technique of obtaining a high-quality image by reducing artifacts even in the high-speed imaging mode in consideration of the above problem.

SUMMARY OF THE INVENTION

According to a first aspect of the present invention, there is provided an X-ray imaging apparatus as described in claim 1.

The other claims relate to further developments.

Further features of the present invention will be apparent from the following description of exemplary embodiments with reference to the attached drawings.

BRIEF DESCRIPTION OF THE DRAWINGS

Fig. 1 is a schematic block diagram showing an overall radiation moving image capturing system;
Fig- 2 is a view schematically showing the internal structure of a rectangular semiconductor substrate;
Fig. 3 is a timing chart showing an example of image readout operation;
Fig. 4 is a circuit diagram showing an equivalent circuit corresponding to one pixel on a rectangular semiconductor substrate;
Figs. 5A and 5B are timing charts of rectangular semiconductor substrate control signals;
Fig. 6 is a timing chart of rectangular semiconductor substrate control signals; and
Fig. 7 is a flowchart at the time of rectangular semiconductor substrate control.

DESCRIPTION OF THE EMBODIMENTS

An exemplary embodiment(s) of the present invention will now be described in detail with reference to the drawings. It should be noted that the relative arrangement of the components, the numerical expressions and numerical values set forth in these embodiments do not limit the scope of the present invention unless it is specifically stated otherwise.

(First Embodiment)

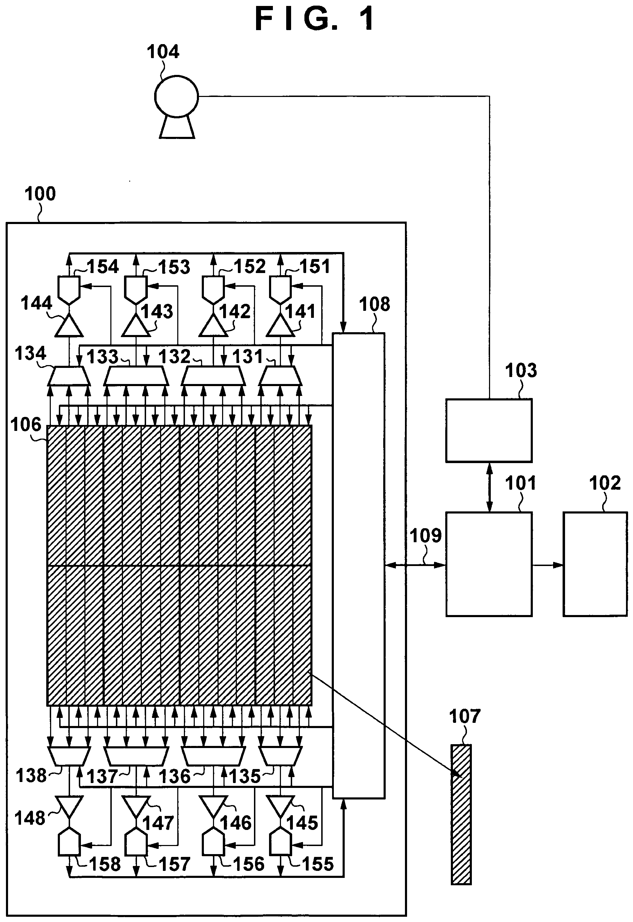

A schematic block diagram showing an overall radiation moving image capturing system based on a large-area flat panel system will be described with reference to Fig. 1. The radiation moving image capturing system includes a radiation imaging apparatus 100, an image processing/system control apparatus 101, an image display apparatus 102, an X-ray generator 103, and an X-ray tube 104. At the time of imaging operation, the image processing/system control apparatus 101 synchronously controls the radiation imaging apparatus 100 and the X-ray generator 103. A scintillator (not shown) converts radiation transmit through an object into visible light, which is subjected to photoelectric conversion in accordance with the amount of light. The resultant data is then A/D-converted. After A/D conversion, the radiation imaging apparatus 100 transfers the frame image data corresponding to the X-ray application to the image processing/system control apparatus 101. After image processing, the image display apparatus 102 displays the radiation image in real time.

The radiation imaging apparatus 100 includes a flat panel sensor 106. The flat panel sensor 106 includes rectangular semiconductor substrates 107 two-dimensionally cut out from a silicon semiconductor wafer in the form of strips. The rectangular semiconductor substrates 107 are tiled on a flat base (not shown) in a matrix of 14 columns x 2 rows. External terminals (electrode pads) (not shown) provided on the rectangular semiconductor substrates 107 arrayed in a matrix are arrayed in a line on each of the upper side portion and lower side portion of the flat panel sensor 106. The electrode pads provided on the rectangular semiconductor substrates 107 are connected to external circuits through flying lead type printed circuit boards (not shown). Analog multiplexers 131 to 138 select pixel outputs from the connected rectangular semiconductor substrates 107 in accordance with control signals from an imaging unit control circuit 108, and output the selected outputs to differential amplifiers 141 to 148 respectively connected to the analog multiplexers 131 to 138. A/D converters 151 to 158 convert analog signals from the differential amplifiers 141 to 148 into digital signals in accordance with synchronization clocks output from the imaging unit control circuit 108, and output the signals to the imaging unit control circuit 108. The imaging unit control circuit 108 combines digital image data having undergone A/D conversion in blocks by the A/D converters 151 to 158 into frame data, and transfers it to the image processing/system control apparatus 101 via a connecting portion 109.

Each of the rectangular semiconductor substrates 107 cut out in the form of strips is a substrate having, for example, a width of about 20 mm and a length of about 140 mm. The flat panel sensor 106 formed by tiling the substrates in a matrix of 14 columns x 2 rows has, for example, a length of about 280 mm and a width of about 280 mm, that is, a square shape having a size of about 11 inch square.

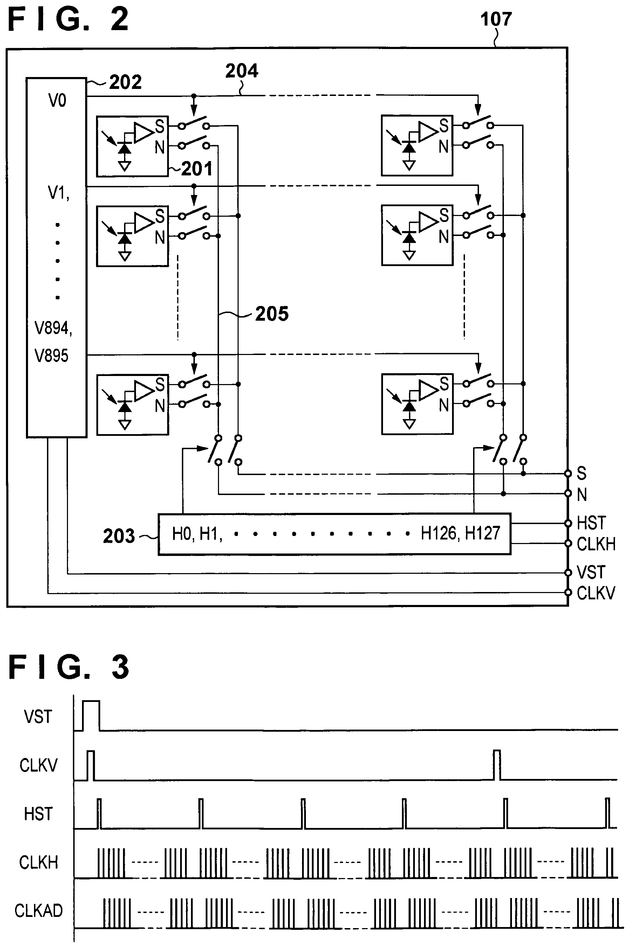

The internal structure of the rectangular semiconductor substrate 107 will be described next with reference to Fig. 2. A timing chart showing an example of image readout processing from the flat panel sensor 106 on which the rectangular semiconductor substrates 107 are tiled will be described with reference to Fig. 3.

Referring to Fig. 2, the rectangular semiconductor substrate 107 includes pixel circuits 201, a vertical shift register 202, and a horizontal shift register 203. A row control signal 204 is a signal in the row direction. A column control signal 205 is a signal in the column direction.

The pixel circuits 201 are pixel circuits including photoelectric conversion elements two-dimensionally arrayed on the rectangular semiconductor substrate 107. The vertical shift register 202 and the horizontal shift register 203 function as readout control circuits, which receive a horizontal shift register start signal HST, a vertical shift register start signal VST, a horizontal shift clock signal CLKH, and a vertical shift clock signal CLKV via the external terminals.

Referring to the timing chart of Fig. 3, when the vertical shift clock signal CLKV rises while the vertical shift register start signal VST is at "H", the internal circuit of the vertical shift register 202 is reset. An "H" signal is then output to an output V0 of the vertical shift register 202 to enable pixel outputs corresponding to one line controlled by the row control signal 204. When the horizontal shift clock signal CLKH rises while the horizontal shift register start signal HST is at "H", the internal circuit of the horizontal shift register 203 is reset. An "H" signal is then output to an output H0 of the horizontal shift register 203 to output one of the pixel outputs enabled by the row control signal 204 which is output from the pixel circuit 201 selected by the output H0 to the analog output terminal. Horizontal shift clock signal CLKH pulses are sequentially input to the horizontal shift register 203 to sequentially shift the "H" output to H0, H1, ..., H126, and H127, thus completing readout operation corresponding to one line. The vertical shift clock signal CLKV is then input to the vertical shift register 202 to switch the "H" output to V1. Thereafter, pixel outputs corresponding to one line controlled by the row control signal 204 are enabled to perform pixel readout operation. Sequentially repeating this operation will read out pixel outputs from the entire rectangular semiconductor substrate 107.

Since pixel values from the rectangular semiconductor substrate 107 are sequentially output to the external analog output terminal in synchronism with the horizontal shift clock signal CLKH, the A/D converter performs A/D conversion in response to an A/D conversion clock CLKAD synchronized with the horizontal shift clock signal CLKH.

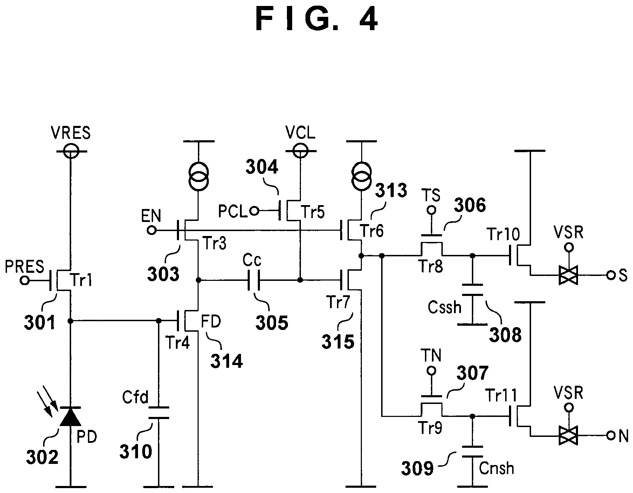

Fig. 4 is a circuit diagram corresponding to one pixel on each tiled rectangular semiconductor substrate. Referring to Fig. 4, applying a reset voltage VRES to a switching MOS transistor 301 will reset a photodiode unit 302 and a floating diffusion capacitor 310. A switching MOS transistor 303 activates a MOS transistor 314 functioning as a floating diffusion amplifier. A switching MOS transistor 313 activates a MOS transistor 315 functioning as a source follower amplifier. A switching MOS transistor 304 is combined with a clamp capacitor 305 (capacitor 305) to form a clamp circuit, which can remove kTC noise (reset noise) generated by the photodiode unit 302. A switching MOS transistor 306 samples and holds a signal voltage corresponding to an amount of light. A switching MOS transistor 307 samples and holds the clamp voltage VCL. When the switching MOS transistor 306 is turned on, a capacitor 308 accumulates electric charge. The capacitor 308 accumulates electric charge corresponding to the voltage of the photodiode unit 302 to which noise and dark current components are added. When the switching MOS transistor 307 is turned on, a capacitor 309 accumulates electric charge. The capacitor 309 accumulates electric charge corresponding to the clamp voltage VCL, that is, noise and dark current components. Subtracting the electric charge accumulated in the capacitor 309 from the electric charge accumulated in the capacitor 308 can obtain a voltage corresponding to the amount of light from the photodiode unit 302. The differential amplifiers 141 to 148 perform this subtraction.

The pixel value data obtained from the rectangular semiconductor substrate 107 contains the noise component generated by the photodiode unit 302 which cannot be removed by subtracting the electric charge accumulated in the capacitor 309 from the electric charge accumulated in the capacitor 308. For this reason, as is well known, such pixel value data is corrected by using pixel value data captured without application of radiation as fixed pattern noise (FPN), that is, an FPN image.

Sampling operation to be performed when a moving image is to be captured by intermittently irradiating an object with radiation in the form of pulses will be described with reference to Figs. 4 and 5A.

Referring to Fig. 5A, at time t1, a synchronization signal SYNC is input from the image processing/system control apparatus 101. When the synchronization signal SYNC is input, to start accumulation of radiation, the image processing/system control apparatus 101 sets the EN signal to High at time t2 to turn on the switching MOS transistor 303 and the switching MOS transistor 313. The image processing/system control apparatus 101 then activates the pixel circuit on the sensor chip and sets the PRES signal at High to turn on the switching MOS transistor 301. The image processing/system control apparatus 101 applies the reset voltage VRES to the floating diffusion capacitor 310 to reset the sensor. The interval at which the synchronization signal SYNC is input corresponds to the imaging interval FT for a moving image.

At time t3, the image processing/system control apparatus 101 cancels the reset by turning off the switching MOS transistor 301 (PRES signal), and then sets the PCL signal at High to turn on the switching MOS transistor 304, thereby applying the clamp voltage VCL to the clamp capacitor 305.

At time t4, the image processing/system control apparatus 101 turns off the switching MOS transistor 303 (EN signal) and the switching MOS transistor 304 (PCL signal) to finish pixel resetting operation and start accumulation in the photodiode unit 302, thus enabling the exposure of radiation.

The object is irradiated with radiation in the form of pulses for a predetermined period of time. Therefore, in order to minimize the influence of noise components generated by the photodiode unit 302, the image processing/system control apparatus 101 finishes accumulation when a time corresponding to the application time of radiation has elapsed.

At time t5, the image processing/system control apparatus 101 sets the EN signal at High again to turn on the switching MOS transistor 303 and the switching MOS transistor 313 and activate the pixel circuit on the sensor chip. The image processing/system control apparatus 101 then sets the TS signal at High to turn on the switching MOS transistor 306 and cause the capacitor 308 to sample and hold the voltage of the photodiode unit 302.

At time t6, the image processing/system control apparatus 101 turns off the switching MOS transistor 306 (TS signal) to finish sampling and holding and disable the exposure of radiation. Subsequently, the image processing/system control apparatus 101 sets the PRES signal at High to turn on the switching MOS transistor 301 and apply the reset voltage VRES to the floating diffusion capacitor 310, thereby resetting the sensor.

At time t7, the image processing/system control apparatus 101 turns off the switching MOS transistor 301 (PRES signal), and then sets the PCL signal at High to turn on the switching MOS transistor 304 and apply the clamp voltage VCL to the capacitor 305. Subsequently, the image processing/system control apparatus 101 sets the TN signal at High to turn on the switching MOS transistor 307 and cause the capacitor 309 to sample and hold the clamp voltage VCL.

At time t8, the image processing/system control apparatus 101 finishes sampling and holding by turning off the switching MOS transistor 307 (TN signal), switching MOS transistor 304 (PCL signal), switching MOS transistor 303, and switching MOS transistor 313 (EN signal). The image processing/system control apparatus 101 sequentially outputs the voltages sampled and held by the capacitor 308 and the capacitor 309 to the outside by scanning the vertical and horizontal shift registers.

Although it is possible to change these driving timings according to predetermined settings, the set driving operation is repeated during imaging operation to simplify control. That is, the image processing/system control apparatus 101 detects the synchronization signal SYNC again at time t9. Upon detecting the synchronization signal SYNC, the image processing/system control apparatus 101 sets the EN signal at High at time t10 to turn on the switching MOS transistor 303 and the switching MOS transistor 313 and activate the pixel circuit on the sensor chip. The image processing/system control apparatus 101 repeats the above operation. The image processing/system control apparatus 101 simultaneously performs the above sampling operation for all pixels. This implements collective electronic shutter operation and equalizes the accumulation times of the respective pixels, thereby preventing pixel value discontinuity caused by the tiling of the rectangular semiconductor substrates. The sampled and held voltages are read out as analog signals by scanning the shift registers in the horizontal and vertical directions for each rectangular semiconductor substrate. Converting this analog signal into a digital signal by the A/D converter will generate a digital image signal. Performing scanning while performing exposure of radiation can cope with a high frame rate at the time of moving image capturing because it is possible to perform accumulation of radiation and scanning at the same timing.

Sampling operation to be performed when a moving image is captured by intermittently irradiating an object with radiation in the form of pulses will be described with reference to Figs. 5A, 5B, 6, and 7.

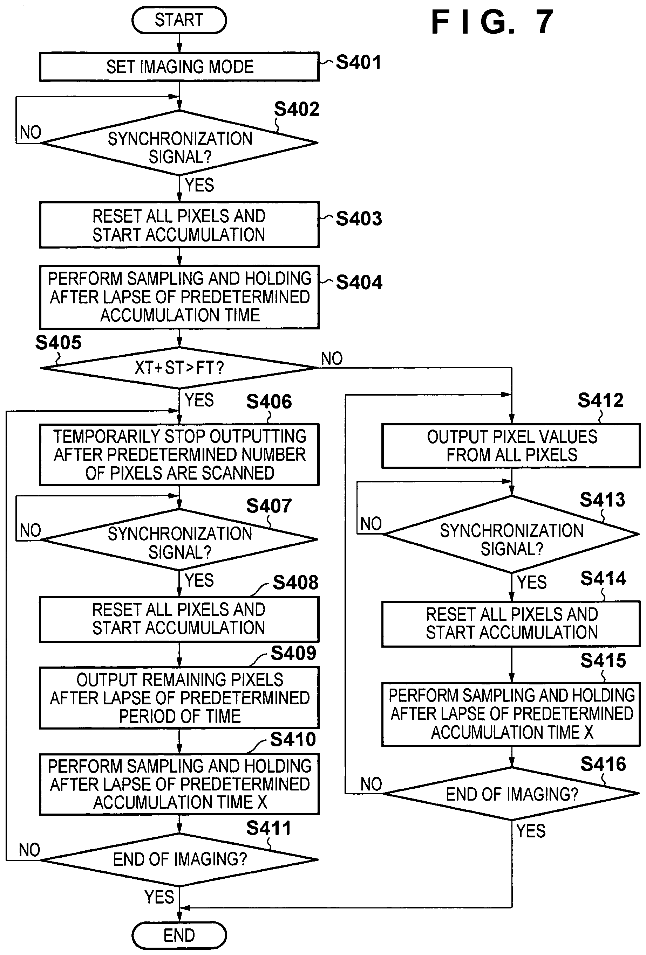

First of all, in step S401 in Fig. 7, the radiation imaging apparatus 100 starts operation in the imaging mode set by the image processing/system control apparatus 101. The imaging mode is, for example, imaging at a high or low frame rate.

In step S402, the radiation imaging apparatus 100 determines whether a synchronization signal corresponding to the first image input from the image processing/system control apparatus 101 is detected. If the radiation imaging apparatus 100 determines that a synchronization signal is detected (YES in step S402), the process advances to step S403. If the radiation imaging apparatus 100 determines that no synchronization is detected (No in step S402), the process waits until a synchronization signal is detected.

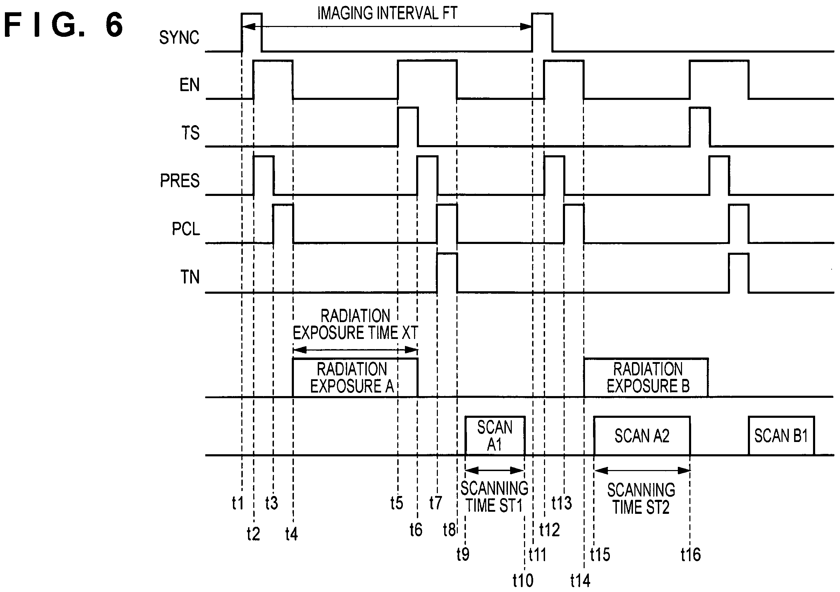

In step S403, the image processing/system control apparatus 101 resets all the pixels and start accumulation of radiation. At time t1 in Fig. 6, when the first synchronization signal SYNC is input from the image processing/system control apparatus 101, in order to start accumulation of radiation, the image processing/system control apparatus 101 sets the EN signal at High at time t2 to turn on the switching MOS transistor 303 and the switching MOS transistor 313 to activate the pixel circuit on the sensor chip. At the same time, the image processing/system control apparatus 101 sets the PRES signal at High to turn on the switching MOS transistor 301 and apply the reset voltage VRES to the photodiode unit 302 and the floating diffusion capacitor 310, thereby resetting the sensor. Subsequently, the image processing/system control apparatus 101 turns off the switching MOS transistor 301 (PRES signal) at time t3 to cancel the reset. Thereafter, the image processing/system control apparatus 101 sets the PCL signal at High to turn on the switching MOS transistor 304 and apply the clamp voltage VCL to the clamp capacitor 305 (capacitor 305). At time t4, the image processing/system control apparatus 101 finishes resetting operation by turning off the switching MOS transistor 304 (PCL signal) and the switching MOS transistor 301 (PRES signal). This starts accumulation in the photodiode unit 302 and enables exposure of radiation.

In step S404, after a predetermined accumulation time X elapses, the image processing/system control apparatus 101 performs sampling and holding. The object is irradiated with radiation in the form of pulses for a predetermined period of time. When the accumulation time X corresponding to the application time has elapsed, in order to finish accumulation, the image processing/system control apparatus 101 sets the EN signal at High at time t5 to turn on the switching MOS transistor 303 and the switching MOS transistor 313 and activate the pixel circuit on the sensor chip. At the same time, the image processing/system control apparatus 101 sets the TS signal at High to turn on the switching MOS transistor 306 and cause the capacitor 308 to sample and hold the voltage of the photodiode unit 302. When the image processing/system control apparatus 101 turns off the switching MOS transistor 306 (TS signal) at time t6, the sampling and holding operation ends, thus disabling the exposure of radiation. Subsequently, the image processing/system control apparatus 101 sets the PRES signal at High to turn on the switching MOS transistor 301 and apply the reset voltage VRES to the floating diffusion capacitor 310, thereby resetting the sensor. At time t7, the image processing/system control apparatus 101 turns off the switching MOS transistor 301 (PRES signal), and then sets the PCL signal at High to turn on the switching MOS transistor 304 and apply the clamp voltage VCL to the capacitor 305. The image processing/system control apparatus 101 then sets the TN signal at High to turn on the switching MOS transistor 307 and cause the capacitor 309 to sample and hold the clamp voltage VCL.

At time t8, the image processing/system control apparatus 101 turns off the switching MOS transistor 307 (TN signal), and turns off the switching MOS transistor 304 (PCL signal), the switching MOS transistor 303, and the switching MOS transistor 313 (EN signal), thereby finishing sampling and holding operation.

In step S405, the image processing/system control apparatus 101 decides the minimum imaging interval FT of a synchronization signal from the set imaging mode. The image processing/system control apparatus 101 determines whether the total time of the scanning time ST (to be also referred to as the output time ST) required to output electrical signals from all the photoelectric conversion elements and the radiation signal accumulation time XT (to be also referred to as the exposure time XT) is larger than the imaging interval FT of the synchronization signal. If the image processing/system control apparatus 101 determines that the total time is longer than the imaging interval FT of the synchronization signal (YES in step S405), the process advances to step S406. If the image processing/system control apparatus 101 determines that the total time is shorter than the imaging interval FT of the synchronization signal (NO in step S405), the process advances to step S412. Since the timing of the driving signal in step S412 is the same as that in Fig. 5A, a description of it will be omitted.

Note that in the above sampling operation, since currents simultaneously flow in all the pixel circuits on the rectangular semiconductor substrate, the power supply voltage of the rectangular semiconductor substrate fluctuates.

In this embodiment, therefore, in step S406, the image processing/system control apparatus 101 waits for a predetermined period of time until fluctuations in power supply voltage converge. At time t9 in Fig. 6, the image processing/system control apparatus 101 scans each pixel circuit in which radiation is accumulated by radiation exposure A to start a scan A1 to output the resultant value as an analog signal. When analog signals corresponding to a predetermined number of pixel circuits are output, the image processing/system control apparatus 101 temporarily stops scanning the shift registers at time t10. More specifically, the image processing/system control apparatus 101 stops inputting the horizontal shift register start signal HST, vertical shift register start signal VST, horizontal shift clock signal CLKH, and vertical shift clock signal CLKV to the vertical shift register 202 and the horizontal shift register 203 in Fig. 2 to temporarily stop outputting analog signals.

In step S407, the image processing/system control apparatus 101 determines at time t11 in Fig. 6 whether the synchronization signal SYNC for the second image is detected. If the image processing/system control apparatus 101 determines that the synchronization signal SYNC is detected (YES in step S407), the process advances to step S408. If the image processing/system control apparatus 101 determines that the synchronization signal SYNC is not detected (NO in step S407), the process waits until the signal is detected.

In step S408, in order to start accumulation of radiation, the image processing/system control apparatus 101 sets the EN signal at High at time t12 to turn on the switching MOS transistor 303 and the switching MOS transistor 313 and activate the pixel circuit on the sensor chip. At the same time, the image processing/system control apparatus 101 sets the PRES signal at High to turn on the switching MOS transistor 301 and apply the reset voltage VRES to the photodiode unit 302 and the floating diffusion capacitor 310, thereby resetting the sensor.

At this time, since currents flow in all the pixel circuits, the power supply voltage of the semiconductor circuit substrate fluctuates. However, since scanning is temporarily stopped, output analog signals are not disturbed. Depending on the arrangement of a pixel circuit, however, fluctuations in power supply voltage may give offsets to sampled and held analog signals. The offsets generated by the fluctuations in power supply voltage are constant. It is therefore possible to acquire an FPN image (fixed pattern noise image) for offset correction of a noise portion upon the same driving operation as that described above before the radiation exposure and cancel an offset based on the difference between a radiation image and the pixel value data of the FPN image for offset correction.

Subsequently, at time t13, the image processing/system control apparatus 101 cancels the reset by turning off the switching MOS transistor 301 (PRES signal). The image processing/system control apparatus 101 then sets the PCL signal at High to turn on the switching MOS transistor 304 and apply the clamp voltage VCL to the capacitor 305. At time t14, the image processing/system control apparatus 101 finishes the resetting operation of the pixel by turning off the switching MOS transistor 304 (PCL signal), the switching MOS transistor 303, and the switching MOS transistor 313 (EN signal). This causes the photodiode unit 302 to start accumulation and enables radiation exposure B.

The power supply voltage of the semiconductor circuit board fluctuates due to resetting operation from time t12 to time t14. After a predetermined period of time lapses until the fluctuations in power supply voltage converge, the image processing/system control apparatus 101 resumes a scan A2 at time t15 to cause the semiconductor circuit board to output an analog signal which has not been output. At time t16, the image processing/system control apparatus 101 stops scanning when all the semiconductor circuit boards output analog signals. At this time, the image processing/system control apparatus 101 decides a scanning time ST1 such that a scanning time ST2 for the scan A2 becomes equal to or less than the exposure time XT. The number of pixels to be scanned in the scan A1 may be the number of pixels corresponding to the scanning time ST1.

For example, as shown in Fig. 1, the number of pixels on the rectangular semiconductor substrate 107 is 128 x 896 = 114688, and the horizontal shift clock signal CLKH has a frequency of 20 MHz. The scanning time ST corresponds to the time required to scan the four rectangular semiconductor substrates 107, and hence

$$ST = 114688 \times (1/20\ M) \times 4 = \text{about } 23\ ms$$

If the frame rate is 15 FPS, the imaging interval FT is given by

$$FT = 1/15 = 66.7\ ms$$

If the accumulation time XT (exposure time XT) of a radiation signal is 16 ms, then

$$XT + ST = 16\ ms + 23\ ms = 39\ ms < FT = 66.7\ ms$$

In this case, therefore, the process shifts from step S405 to step S412 in Fig. 7, and shift register scanning is controlled in the manner shown in Fig. 5A without temporary stop.

However, if the frame rate is further increased to 30 FPS, the imaging interval FT is given by

$$FT = 1/30 = 33.3\ ms$$

If, therefore, the accumulation time XT of a radiation signal is 16 ms, then

$$XT + ST = 16\ ms + 23\ ms = 39\ ms > FT = 33.3\ ms$$

The process shifts from step S405 to step S406 in Fig. 7. The image processing/system control apparatus 101 temporarily stops scanning the shift registers, and performs control operation as in the manner shown in Fig. 6. At this time, if scanning time ST2 = 14 ms < XT = 16 ms in consideration of the reset time, for example, the scanning time ST1 may be set to 9 ms. When scanning the number of pixels corresponding to 9 ms, the image processing/system control apparatus 101 temporarily stops scanning.

As described above, when a predetermined number of pixels are scanned, scanning is temporarily stopped until the detection of a synchronization signal. With this operation, even if jitter occurs in a synchronization signal, the number of pixels to be scanned remains the same before and after resetting operation. For this reason, it is also possible to reduce artifacts by acquiring an FPN image for offset correction and calculating the difference between it and a radiation image. This makes it possible to output a high-quality radiation image.

(Second Embodiment)

In the first embodiment, when the number of pixels scanned has reached a predetermined number, the image processing/system control apparatus 101 temporarily disables the horizontal shift register start signal HST, vertical shift register start signal VST, horizontal shift clock signal CLKH, and vertical shift clock signal CLKV input to the vertical shift register 202 and the horizontal shift register 203, and detects a synchronization signal. However, the present invention is not limited to this method. The apparatus may be configured to temporarily disable a horizontal shift register start signal HST, vertical shift register start signal VST, horizontal shift clock signal CLKH, and vertical shift clock signal CLKV upon scanning a predetermined number of rows and detect a synchronization signal.

This makes it possible to control the temporary stop and resumption of shift register scanning by only counting the vertical shift clock signal CLKV. This can facilitate control of the shift registers. In addition, since the apparatus temporarily stops and resumes shift register scanning for each line, artifacts are made less noticeable.

In addition, it is possible to control shift register scanning for each control signal from analog multiplexers 131 to 138 which are used to select an analog output from a plurality of rectangular semiconductor substrates 107. This can improve the setting accuracy of scanning times ST1 and ST2.

According to the present invention, it is an object to obtain a high-quality image by reducing artifacts in the high-speed imaging mode.

(Other Embodiments)

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable storage medium).

While the present invention has been described with reference to exemplary embodiments, it is to be understood that the invention is not limited to the disclosed exemplary embodiments but to the following claims.

**Claims**

1. An X-ray imaging apparatus comprising:

   a plurality of pixel circuits (201), each of the plurality of pixel circuits (201) comprising (i) a conversion unit (302, 314, 305, 315) adapted to convert generated X-ray to an electrical signal, (ii) a sampling and holding unit (306, 308) adapted to sample and to hold the electrical signal, and (iii) a resetting unit (301, 304) adapted to reset the conversion unit (302, 314, 305, 315), wherein the conversion unit (302, 314, 305, 315) includes a photodiode unit (302), and an amplifier (314, 315) that amplifies electric charge generated and accumulated in the photodiode unit (302) and converts said electric charge to the electrical signal;
   a selection unit (202, 203) adapted to perform a selection operation of the plurality of pixel circuits (201) that is to output the electrical signal sampled and held by the sampling and holding unit (306, 308), in order to sequentially output the electrical signal sampled and held by the sampling and holding unit (306, 308) from the plurality of pixel circuits (201);
   a control unit (101, 108) adapted to control the plurality of pixel circuits (201) so that the reset is collectively performed to the plurality of pixel circuits (201), based on a synchronization signal indicative of X-ray generation timing that is detected by the control unit (101, 108), and the sampling and holding is collectively performed to the plurality of pixel circuits (201) after a predetermined accumulation time; and
   a determination unit (101) adapted to determine, when the reset is performed based on the synchronization signal, whether or not the selection operation to the plurality of pixel circuits (201), based on an immediately preceding synchronization signal is completed
   **characterized in that**
   if the determination unit (101) determines that the selection operation of the plurality of pixel circuits (201) is not completed during an imaging interval defined by an interval of two consecutive synchronization signals, the selection unit (202, 203) stops the selection operation of the plurality of pixel circuits (201) in which a portion of pixel circuits, out of the plurality of pixel circuits, remains unselected, and resumes the selection operation of the plurality of pixel circuits (201) to the portion of the pixel circuits after the control unit (101, 108) starts and finishes the reset to the plurality of pixel circuits (201) for starting accumulation of electric charge by a plurality of photodiode unit (302) in the plurality of pixel circuits (201).

2. The apparatus according to claim 1, wherein the X-ray is irradiated to the plurality of pixel circuits in the form of pulses having an exposure time that is shorter than said imaging interval, wherein the selection unit starts a selection operation of the pixel circuits between the pulses of the exposure time, wherein the selection unit performs the selection operation to the portion of the pixel circuits after a predetermined time elapses from the reset having been performed by the control unit, and wherein the determination unit determines whether a total time of the exposure time and an output time required to output the analog signals corresponding to all the pixel circuits is longer than said imaging interval based on said synchronization signals input from an external apparatus, and the determination unit determines that the total time is longer than the imaging interval, the selection unit stops the selection operation in which a portion of pixel circuits, out of the plurality of pixel circuits, remains unselected, and resumes the selection operation to the portion of the pixel circuits after the control unit performs the reset.

3. The apparatus according to claim 1, wherein the control unit (101) detects the synchronization signal input from an external apparatus.

4. The apparatus according to claim 1, further comprising a correction unit (101) adapted to correct a noise offset based on a difference between an X-ray image based on the analog signal output from said output unit and pixel value data of fixed pattern noise acquired by said output unit in advance based on the analog signal output in advance before the exposure of the X-ray.

**Patentansprüche**

1. Röntgenstrahlabbildungsvorrichtung, umfassend:

mehrere Pixelschaltungen (201), wobei eine jeweilige der mehreren Pixelschaltungen (201) umfasst: (i) eine Umwandlungseinheit (302, 314, 305, 315), die ausgebildet ist zum Umwandeln erzeugter Röntgenstrahlen in ein elektrisches Signal, (ii) eine Abtast- und Halteeinheit (306, 308), die ausgebildet ist zum Abtasten und Halten des elektrischen Signals, und (iii) eine Rücksetzeinheit (301, 304), die ausgebildet ist zum Rücksetzen der Umwandlungseinheit (302, 314, 305, 315), wobei die Umwandlungseinheit (302, 314, 305, 315) eine Photodiodeneinheit (302) enthält, und einen Verstärker (314, 315), der elektrische Ladung verstärkt, die in der Photodiodeneinheit (302) erzeugt und akkumuliert wurde, und die elektrische Ladung in das elektrische Signal umwandelt;
eine Auswahleinheit (202, 203), die ausgebildet ist zum Durchführen eines Auswahlvorgangs aus den mehreren Pixelschaltungen (201), welche das durch die Abtast- und Halteeinheit (306, 308) abgetastete und gehaltene elektrische Signal ausgeben soll, um das durch die Abtast- und Halteeinheit (306, 308) abgetastete und gehaltene elektrische Signal aus den mehreren Pixelschaltungen (201) sequentiell auszugeben;
eine Steuereinheit (101, 108), die ausgebildet ist zum Steuern der mehreren Pixelschaltungen (201), so dass die Rücksetzung an den mehreren Pixelschaltungen (201) kollektiv durchgeführt wird, basierend auf einem Synchronisationssignal, das eine Röntgenstrahlerzeugungszeit angibt, detektiert durch die Steuereinheit (101, 108), und das Abtasten und Halten an den mehreren Pixelschaltungen (201) nach einer vorbestimmten Akkumulierungszeit kollektiv durchgeführt wird; und
eine Bestimmungseinheit (101), die ausgebildet ist zum Bestimmen, wenn die Rücksetzung basierend auf dem Synchronisationssignal durchgeführt wird, ob der Auswahlvorgang aus den mehreren Pixelschaltungen (201), basierend auf einem unmittelbar vorangehenden Synchronisationssignal abgeschlossen ist oder nicht, **dadurch gekennzeichnet, dass**
falls die Bestimmungseinheit (101) bestimmt, dass der Auswahlvorgang aus den mehreren Pixelschaltungen (201) während eines Abbildungsintervalls, das durch ein Intervall von zwei konsekutiven Synchronisationssignalen definiert wird, nicht abgeschlossen ist, die Auswahleinheit (202, 203) den Auswahlvorgang aus den mehreren Pixelschaltungen (201) abbricht, in denen ein Abschnitt von Pixelschaltungen, aus den mehreren Pixelschaltungen, nicht-ausgewählt bleibt und mit dem Auswahlvorgang aus den mehreren Pixelschaltungen (201) zum Abschnitt der Pixelschaltungen zurückkehrt, nachdem die Steuereinheit (101, 108) das Rücksetzen der mehreren Pixelschaltungen (201) startet und beendet, um Akkumulation elektrischer Ladung durch mehrere Photodiodeneinheiten (302) in den mehreren Pixelschaltungen (201) zu starten.

2. Vorrichtung nach Anspruch 1, wobei die Röntgenstrahlen auf die mehreren Pixelschaltungen gestrahlt werden in Form von Impulsen mit einer Belichtungszeit, die kürzer ist als das Abbildungsintervall, wobei die Auswahleinheit einen Auswahlvorgang aus den Pixelschaltungen zwischen den Impulsen der Belichtungszeit startet, wobei die Auswahleinheit den Auswahlvorgang am Abschnitt der Pixelschaltungen durchführt, nachdem eine vorbestimmte Zeit ab der durch die Steuereinheit durchgeführten Rücksetzung vergangen ist, und wobei die Bestimmungseinheit bestimmt, ob eine Gesamtzeit der Belichtungszeit und einer Ausgabezeit, die erforderlich ist, um die allen Pixelschaltungen entsprechenden Analogsignale auszugeben, länger ist als das Abbildungsintervall basierend auf den von einer externen Vorrichtung eingegebenen Synchronisationssignalen, und die Bestimmungseinheit bestimmt, dass die Gesamtzeit länger ist als das Abbildungsintervall, die Auswahleinheit den Auswahlvorgang abbricht, bei dem ein Abschnitt von Pixelschaltungen, aus den mehreren Pixelschaltungen, nicht-ausgewählt bleibt, und mit dem Auswahlvorgang zum Abschnitt der Pixelschaltungen zurückkehrt, nachdem die Steuereinheit die Rücksetzung durchführt.

3. Vorrichtung nach Anspruch 1, wobei die Steuereinheit (101) das von einer externen Vorrichtung eingegebene Synchronisationssignal detektiert.

**4.** Vorrichtung nach Anspruch 1, ferner umfassend eine Korrektureinheit (101), die ausgebildet ist zum Korrigieren eines Rauschversatzes basierend auf einer Differenz zwischen einem Röntgenstrahlbild basierend auf dem von der Ausgabeeinheit ausgegebenen Analogsignal und Pixelwertdaten eines festen Störmusters (engl.: fixed pattern noise), erfasst im Voraus durch die Ausgabeeinheit, basierend auf dem im Voraus, vor der Belichtung der Röntgenstrahlung, ausgegebenen Analogsignal.

**Revendications**

**1.** Appareil d'imagerie par rayons X, comprenant :

une pluralité de circuits de pixels (201), chacun de la pluralité de circuits de pixels (201) comprenant (i) une unité de conversion (302, 314, 305, 315) conçue pour convertir des rayons X générés en un signal électrique, (ii) une unité d'échantillonnage et de maintien (306, 308) conçue pour échantillonner et maintenir le signal électrique, et (iii) une unité de réinitialisation (301, 3004) conçue pour réinitialiser l'unité de conversion (302, 314, 305, 315), où l'unité de conversion (302, 314, 305, 315) comporte une unité à photodiodes (302) et un amplificateur (314, 315) qui amplifie la charge électrique générée et accumulée dans l'unité à photodiodes (302) et convertit ladite charge électrique en le signal électrique ;
une unité de sélection (202, 203) conçue pour effectuer une opération de sélection de la pluralité de circuits de pixels (201), qui doit fournir en sortie le signal électrique échantillonné et maintenu par l'unité d'échantillonnage et de maintien (306, 308), afin de fournir séquentiellement en sortie le signal électrique échantillonné et maintenu par l'unité d'échantillonnage et de maintien (306, 308) provenant de la pluralité de circuits de pixels (201) ;
une unité de commande (101, 108) conçue pour commander la pluralité de circuits de pixels (201) de façon que la réinitialisation soit effectuée collectivement sur la pluralité de circuits de pixels (201), sur la base d'un signal de synchronisation indiquant un cadencement de génération de rayons X qui est détecté par l'unité de commande (101, 108), et l'échantillonnage et le maintien sont effectués collectivement sur la pluralité de circuits de pixels (201) après un temps d'accumulation prédéterminé ; et
une unité de détermination (101) conçue pour déterminer, lorsque la réinitialisation est effectuée sur la base du signal de synchronisation, si oui ou non l'opération de sélection effectuée sur la pluralité de circuits de pixels (201), sur la base du signal de synchronisation immédiatement précédent, est achevée,
**caractérisé en ce que**,
si l'unité de détermination (101) détermine que l'opération de sélection de la pluralité de circuits de pixels (201) n'est pas achevée pendant un intervalle de formation d'image défini par un intervalle entre deux signaux de synchronisation consécutifs, l'unité de sélection (202, 203) interrompt l'opération de sélection de la pluralité de circuits de pixels (201) lors de laquelle une partie des circuits de pixels, parmi la pluralité de circuits de pixels, reste non sélectionnée, et reprend l'opération de sélection de la pluralité de circuits de pixels (201) sur la partie des circuits de pixels après que l'unité de commande (101, 108) a lancé et terminé l'opération de réinitialisation sur la pluralité de circuits de pixels (201) afin de lancer l'accumulation d'une charge électrique par une pluralité d'unités à photodiodes (302) de la pluralité de circuits de pixels (201) .

**2.** Appareil selon la revendication 1, dans lequel les rayons X sont projetés sur la pluralité de circuits de pixels sous la forme d'impulsions ayant un temps d'exposition qui est inférieur audit intervalle de formation d'image, dans lequel l'unité de sélection lance une opération de sélection des circuits de pixels entre les impulsions du temps d'exposition, dans lequel l'unité de sélection effectue l'opération de sélection sur la partie des circuits de pixels après qu'un temps prédéterminé se soit écoulé depuis la réinitialisation ayant été effectuée par l'unité de commande, et dans lequel l'unité de détermination détermine si un temps total du temps d'exposition et d'un temps de sortie requis pour fournir en sortie les signaux analogiques correspondant à tous les circuits de pixels est supérieur audit intervalle de formation d'image sur la base desdits signaux de synchronisation fournis en entrée par un appareil externe, et si l'unité de détermination détermine que le temps total est supérieur à l'intervalle de formation d'image, l'unité de sélection interrompt l'opération de sélection lors de laquelle une partie des circuits de pixels, parmi la pluralité de circuits de pixels, reste non sélectionnée, et reprend l'opération de sélection sur la partie des circuits de pixels après que l'unité de commande a effectué la réinitialisation.

**3.** Appareil selon la revendication 1, dans lequel l'unité de commande (101) détecte le signal de synchronisation fourni en entrée par un appareil externe.

**4.** Appareil selon la revendication 1, comprenant en outre une unité de correction (101) conçue pour corriger un décalage de bruit sur la base d'une différence entre une image de rayons X basée sur le signal analogique fourni en sortie par ladite unité de sortie et de données de valeurs de pixels d'un bruit présentant un motif fixe acquis à l'avance par ladite unité de sortie sur la base du signal analogique fourni en sortie à l'avance avant l'exposition aux rayons X.

# F I G. 1

# F I G. 2

107

204

202

V0

201

V1,

·
·
·
·
·
·

V894,

V895

205

203    H0, H1, · · · · · · · · · · · H126, H127

S
N

HST
CLKH

VST
CLKV

# F I G. 3

VST

CLKV

HST

CLKH

CLKAD

# FIG. 4

# FIG. 5A

SYNC

IMAGING INTERVAL FT

EN

TS

PRES

PCL

TN

RADIATION
EXPOSURE TIME XT

RADIATION
EXPOSURE

RADIATION
EXPOSURE

SCAN

SCANNING TIME ST

t1  t3          t5  t7          t9

t2  t4          t6  t8          t10

EP 2 442 557 B1

# F I G. 5B

EP 2 442 557 B1

# FIG. 6

SYNC

EN

TS

PRES

PCL

TN

IMAGING INTERVAL FT

RADIATION
EXPOSURE TIME XT

RADIATION
EXPOSURE A

RADIATION
EXPOSURE B

SCAN
A1

SCAN A2

SCAN B1

SCANNING
TIME ST1

SCANNING
TIME ST2

t1   t3        t5   t7              t13

    t2   t4        t6   t8        t12

         t9      t11   t15      t16

              t10   t14

EP 2 442 557 B1

# FIG. 7

START

SET IMAGING MODE — S401

S402

SYNCHRONIZATION SIGNAL? — NO

YES

RESET ALL PIXELS AND START ACCUMULATION — S403

PERFORM SAMPLING AND HOLDING AFTER LAPSE OF PREDETERMINED ACCUMULATION TIME — S404

S405 — $XT+ST>FT$? — NO

YES — S406

TEMPORARILY STOP OUTPUTTING AFTER PREDETERMINED NUMBER OF PIXELS ARE SCANNED

S407

SYNCHRONIZATION SIGNAL? — NO

YES — S408

RESET ALL PIXELS AND START ACCUMULATION

S409

OUTPUT REMAINING PIXELS AFTER LAPSE OF PREDETERMINED PERIOD OF TIME

S410

PERFORM SAMPLING AND HOLDING AFTER LAPSE OF PREDETERMINED ACCUMULATION TIME X

S411

END OF IMAGING? — NO

YES

S412

OUTPUT PIXEL VALUES FROM ALL PIXELS

S413

SYNCHRONIZATION SIGNAL? — NO

YES — S414

RESET ALL PIXELS AND START ACCUMULATION

S415

PERFORM SAMPLING AND HOLDING AFTER LAPSE OF PREDETERMINED ACCUMULATION TIME X

S416

END OF IMAGING? — NO

YES

END

18

**REFERENCES CITED IN THE DESCRIPTION**

**Patent documents cited in the description**

- JP 2002026302 A
- US 6035013 A
- JP 2002344809 A